# EUROPEAN PATENT APPLICATION

(11) **EP 3 584 647 A1**
(43) Date of publication of application: **25.12.2019**
(21) Application number: 18178179.0
(22) Date of filing: 18.06.2018
(51) Int. Cl.: G05B 19/042

(54) **DRIVE MONITORING UNIT**

(71) Applicant: Siemens Aktiengesellschaft, 80333 München (DE)
(72) Inventor: Beardmore, Steven, Audley, Stoke-on-Trent ST7 8ED (GB)
(74) Representative: Maier, Daniel Oliver

(57) **Abstract**

Provided is a drive monitoring unit (100) comprising: a programming interface unit (102); and a drive communication unit (103); wherein the programming interface unit (102) is operable to communicate with a drive via the drive communication unit (103). The drive monitoring unit (100) is provided in a portable package that comprises a wireless network interface (101) operable to communicate with a wireless network and with the programming interface unit (102).

## Description

### Technical field

The present disclosure relates to, a drive monitoring units, drives, and to associated methods.

### Background

In industrial environments, it is desirable to monitor the performance of the drives used for motor control.

Current solutions involve plugging a laptop into the drive or to provide an integrated hardware unit for the drive, and to communicate with the drive via a serial connection such as an RS-232 connection.

However, the RS-232 port operates with low speed of communication between the unit and the drive. As a result, the RS-232 is unsuitable for large data transfers, such as those associated with updating a firmware on the drive. Higher speed interfaces than those which use the RS-232 connection e.g. a Serial Peripheral Interface, SPI, may be used. However, voltage converters and other connectors are required to enable the communication between the RS-232 components of the drive and the SPI.

Example embodiments aim to address these, and/or other related problems.

### Summary

According to the present disclosure there are provided an apparatus and a method as set forth in the appended claims. Other features of the invention will be apparent from the dependent claims, and the description which follows.

Accordingly there is provided a drive monitoring unit comprising: a programming interface unit; and a drive communication unit; wherein the programming interface unit is operable to communicate with a drive via the drive communication unit; characterised in that the drive monitoring unit is provided in a portable package that comprises a wireless network interface operable to communicate with a wireless network and with the programming interface unit.

In one example the drive monitoring unit is formed in a removable storage medium package. in one example the drive monitoring unit is packaged as a memory card, such as an SD card. In one example the drive monitoring unit is operable by power supplied over a serial communication interface to the removable storage medium package.

As the drive monitoring unit is operable by power supplied over a serial communication interface, no in-built power supply is required, or stepping down of voltages used for other operational/communication purposes in a drive associated with the drive monitoring unit, thereby reducing the cost and size of the drive monitoring unit.

In one example the programming interface unit is operable to communicate with the drive communication unit over a SPI bus. In one example the drive communication unit is operable to communicate with a drive over the SPI bus.

In this way the need for additional circuitry to convert an existing communication interface to the SPI may be eliminated, thereby reducing the cost and size of the drive monitoring unit. Costs of producing a drive that is to be updated in this way can also be reduced due to the small footprint needed for the interface to the drive monitoring unit.

In addition, the speed of communication with the drive, which has traditionally been the bottleneck considering updates via RS-232, may be increased, allowing for the provision of new firmware or other more substantial updates to the drive to be performed more easily.

In one example the drive monitoring unit further comprises a storage module. In one example the programming interface unit is configured to receive feedback data from the drive communication unit, and to store the feedback data in the storage module.

In one example the drive monitoring unit is operable to build a database of drive performance information based on the feedback data. In one example the database of drive performance information is stored in the storage module.

In one example the programming interface is operable to pass the feedback data from the storage module to the wireless network interface to be communicated therefrom to a wide area network, such as the Web.

In one example the programming interface unit comprises a web server which is accessible via the wireless network interface. In one example the wireless network interface performs network communication according to one or more communication standards, such as Wi-Fi, 3G, 4G, and so on.

In one example the programming interface unit is operable to provide drive parameters, received via the wireless network interface, to the drive communication unit for transmission to a drive.

In one example the drive communication unit is operable to communicate with a drive to receive feedback data from the drive and to pass the feedback data to the programming interface unit; and the programming interface unit is operable to pass the feedback data to the wireless network interface for transmission over a wireless network.

In one example the programming interface unit is operable to manage two-way communication between: a web server that is in communication with the drive monitoring unit, e.g. via the Web, and the wireless network interface; and a drive in communication with the drive monitoring unit via the drive communication unit.

Accordingly there is provided a method of monitoring a drive, using the drive monitoring unit as described herein.

In one example, the method comprises: communicating, via the drive communication unit, with the drive to receive feedback data from the drive; receiving, by the programming interface unit, the feedback data from the drive communication unit; characterised in that the drive monitoring unit receives the feedback data from the programming interface unit, and transmits the feedback data to a wireless network.

Accordingly there is provided a non-transitory computer readable recording medium having recorded thereon a computer program product, comprising instructions which when run execute the method described herein.

Accordingly there is provided a drive system comprising the drive monitoring unit as described herein.

### Brief Description of the Drawings

Examples of the present disclosure will now be described with reference to the accompanying drawings, in which:
Figure 1 shows a schematic overview of a drive monitoring unit;
Figure 2 shows a schematic flow diagram of a method of monitoring a drive, in order to update the drive; and
Figure 3 shows a schematic flow diagram of a method of monitoring a drive.

### Detailed Description

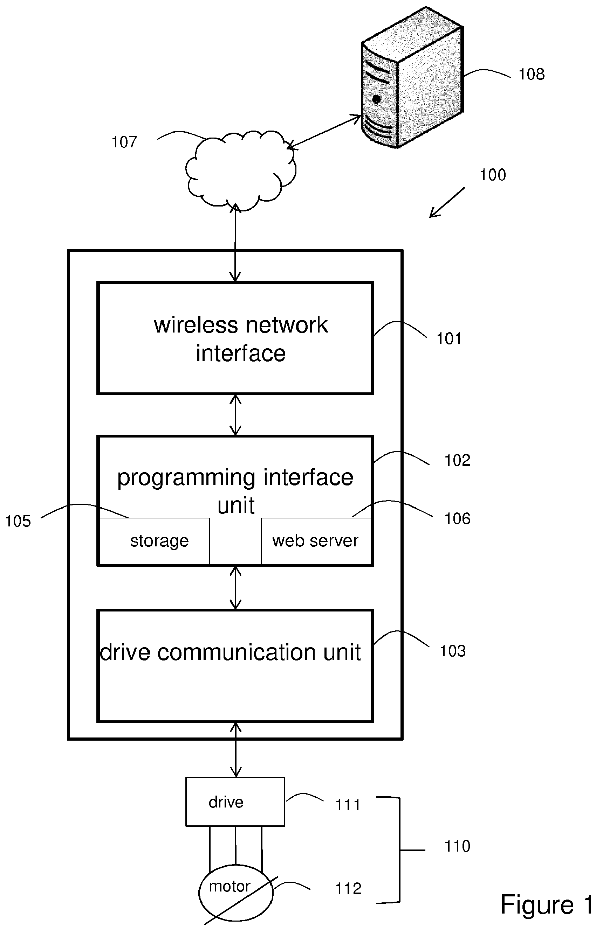

Figure 1 shows a schematic overview of a drive monitoring unit 100 according to an example embodiment. The drive monitoring unit 100 comprises a wireless network interface 101, a programming interface unit 102, and a drive communication unit 103. The drive monitoring unit 100 is used as part of a drive system that includes a drive used for motor control and an associated electric motor. However, it will be appreciated that similar drive update problems occur in the drives mused to control electrical generators and in motor/generator systems. The drive monitoring unit is shown in Figure 1 in conjunction with a drive system 110 that includes a drive 111 and a motor 112.

The drive monitoring unit 100 is provided in a portable package that comprises a wireless network interface 101 operable to receive drive parameters from a wireless network and to provide drive parameters to the programming interface unit 102. In the embodiment of Figure 1, the wireless network is the Internet 107 and the wireless network interface 101 comprises a Wi-Fi interface. The Internet 107 enables the drive monitoring unit 100 to communicate with an external server 108. The wireless network interface 101 enables the drive monitoring unit 100 to receive drive parameters and firmware updates from the extemal server 108 over the Internet 107.

The drive monitoring unit 100 is packaged as an SD card, and as such operates using a power supplied over from the drive 111 via an SD interface of the drive 111. As such, the drive monitoring unit 100 does not require a dedicated power source and can be readily integrated into the drive 111.

The SD card in which the drive monitoring unit 100 is packaged acts like a standard SD card for the storage of data, but can also switch to a monitoring function to read/write drive parameters, and to send/receive control data from the server 108 to the drive 111, either during first commissioning of the drive 111, or for subsequent updates.

Use of the SD interface of the drive 111 means that other interfaces to an existing operator panel of a drive of additional housing components etc. during drive update operations. Since the SD card fits within the SD card slot, the extra space is not required.

The programming interface unit 102 is operable to communicate with the drive communication unit 103 over an SPI bus. Accordingly, the drive communication unit 103 is also operable to communicate with the drive 111 over the SPI bus.

As the communication between the programming interface unit 102 and the drive 104 is realised over an SPI bus, common to many drives, the drive monitoring unit 100 does not require additional circuitry for conversion between an existing communication interface and the SPI. In addition, the speed of communication with the drive 111, which may be a bottleneck in the process or monitoring/updating drive parameters, may be increased, allowing for the provision of new or updated firmware to the drive 111 in a timely manner.

The drive communication unit 103 is configured to transmit feedback data from the drive 111 to the programming interface unit 102.

The drive monitoring unit 100 comprises a storage module 105. The programming interface unit 102 is configured to receive feedback data from the drive communication unit 103, and to store the feedback data in the storage module 105. In the embodiment of Figure 1, the storage module 105 is embedded within the programming interface unit 102. The storage module 105 is configured to provide nonvolatile memory card functionality.

The programming interface unit 102 comprises a web server 106 which is accessible via the wireless network interface 101. Feedback data from the storage module 105 is made accessible over the Internet 107using the web server 106. This enables the user to monitor and control the drive 111 via a standard web browser enabling easy access to monitor drive performance.

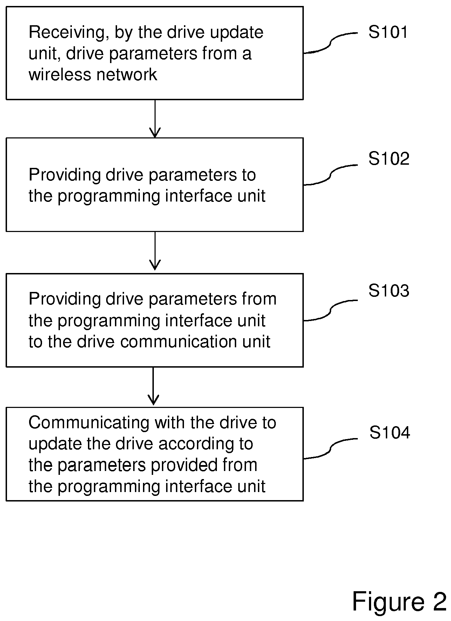

Figure 2 shows schematic flow diagram of a method of monitoring a drive according to an example embodiment. At step S101 the method comprises receiving, by the drive monitoring unit, drive parameters from a wireless network. At step S102 the method comprises providing drive parameters to the programming interface unit. At step S103 the method comprises providing drive parameters from the programming interface unit to the drive communication unit. At step S104 the method comprises communicating with the drive to update the drive, according to the parameters provided from the programming interface unit.

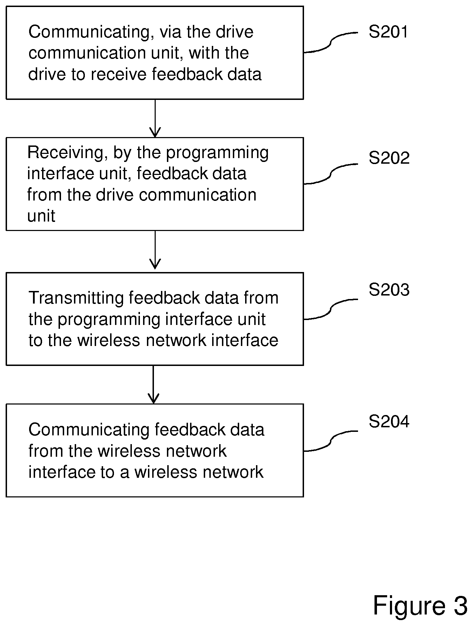

Figure 3 shows schematic flow diagram of a method of monitoring a drive according to an example embodiment, in order to provide a parameter update. At step S201 the method comprises communicating, via the drive communication unit, with the drive to receive feedback data from the drive. At step S202 the method comprises receiving, by the programming interface unit, the feedback data from the drive communication unit. At step S203 the method comprises transmitting the received feedback data to wireless network interface. The method further comprises step S204 of communicating the feedback data from the wireless network interface to a wireless network.

As will be appreciated, the methods of Figure 2 and Figure 3 may be performed or repeated in either order, enabling a convenient way of monitoring and improving.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A drive monitoring unit (100) comprising:
a programming interface unit (102); and
a drive communication unit (103);
wherein the programming interface unit (102) is operable to communicate with a drive via the drive communication unit (103);
**characterised in that** the drive monitoring unit (100) is provided in a portable package that comprises a wireless network interface (101) operable to communicate with a wireless network and with the programming interface unit (102).

2. The drive monitoring unit (100) of claim 1, provided as a removable storage medium package.

3. The drive monitoring unit (100) of claim 2, operable by power supplied over a serial communication interface to the removable storage medium package.

4. The drive monitoring unit (100) of any one of claims 1 to 3, wherein the programming interface unit (102) is operable to communicate with the drive communication unit (103) over a Serial Peripheral Interface, "SPI", bus.

5. The drive monitoring unit (100) of any one of claims 1 to 4, wherein the drive communication unit (103) is operable to communicate with a drive over an SPI bus.

6. The drive monitoring unit (100) of any one of claims 1 to 5, further comprising a storage module (105).

7. The drive monitoring unit (100) of claim 6, wherein the programming interface unit (102) is configured to receive feedback data from the drive communication unit (103), and to store the feedback data in the storage module (105).

8. The drive monitoring unit (100) of claim 7, wherein the programming interface (102) is operable to pass the feedback data from the storage module (105) to the wireless network interface (101) to be communicated therefrom to the Web (107).

9. The drive monitoring unit (100) of any one of claims 1 to 8, wherein the programming interface unit (102) comprises a web server (106) accessible via the wireless network interface (101).

10. The drive monitoring unit (100) of any one of claims 1 to 9, wherein the programming interface unit (102) is operable to provide drive parameters, received via the wireless network interface (101), to the drive communication unit (103) for transmission to a drive.

11. The drive monitoring unit (100) of any one of claims 1 to 10, wherein the drive communication unit (103) is operable to communicate with a drive to receive feedback data from the drive and to pass the feedback data to the programming interface unit (102); and the programming interface unit (102) is operable to pass the feedback data to the wireless network interface (101) for transmission over a wireless network.

12. The drive monitoring unit (100) of any one of claims 1 to 11, wherein the programming interface unit (102) is operable to manage two-way communication between: a web server that is in communication with the drive monitoring unit (100) via the Web and the wireless network interface (101); and a drive in communication with the drive monitoring unit (100) via the drive communication unit (103).

13. A method of monitoring a drive and/or a method of updating a drive, performed using the drive monitoring unit of any one of claims 1 to 8.

14. A non-transitory computer readable recording medium having recorded thereon a computer program for executing the method of claim 13.

15. A drive comprising the drive monitoring unit of any one of claims 1 to 12.
